# EUROPEAN PATENT SPECIFICATION

(11) **EP 3 011 193 B1**
(45) Date of publication and mention of the grant of the patent: **29.05.2019**
(21) Application number: 14741933.7
(22) Date of filing: 11.06.2014
(51) Int. Cl.: F16C 1/24, F16C 1/26, F16C 1/10

(54) **A POLYMERIC TUBULAR CONTROL CABLE LINER MANUFACTURED BY EXTRUSION AND INCORPORATING TRANVERSE INTERNAL LUBRICANT RETENTION CAVITIES**
DURCH EXTRUSION HERGESTELLTER POLYMERER ROHRFÖRMIGER STEUERKABELMANTEL UND INTEGRATION VON QUERLAUFENDEN INTERNEN GLEITMITTELHALTEHOHLRÄUMEN
REVÊTEMENT DE CÂBLE DE COMMANDE TUBULAIRE POLYMÈRE FABRIQUÉ PAR EXTRUSION ET INCORPORANT DES CAVITÉS DE RÉTENTION DE LUBRIFIANT INTERNES TRANSVERSALES

(30) Priority: 18.06.2013 GB 201310846
(43) Date of publication of application: 27.04.2016
(73) Proprietor: Pileci, Antonio Fernando, Welford on Avon, Warwickshire CV37 8PU (GB)
(72) Inventor: Pileci, Antonio Fernando, Welford on Avon, Warwickshire CV37 8PU (GB)
(74) Representative: Ellis, Christopher Paul
(86) International application number: PCT/GB2014/000222
(87) International publication number: WO 2014/202928

(56) References cited:
- CN-U- 203 604 416
- FR-A1- 2 888 901
- JP-A- 2008 223 832
- US-A1- 2005 173 960

## Description

### TECHNICAL FIELD

The present invention relates to control cables.

### BACKGROUND ART

The term control cable' (or push/pull cable) refers to a method of attachment or active connection between two separate parts of an operating system whereby a movement at one end of the control cable will produce a reciprocal or complementary movement at its opposing end. Thus by virtue of this active connection the attached ends of the operating system are able to move in unison. The two parts of the operating system may not be in close proximity to one another or in the same horizontal or vertical plane and in such circumstances a flexible control cable may be preferred.

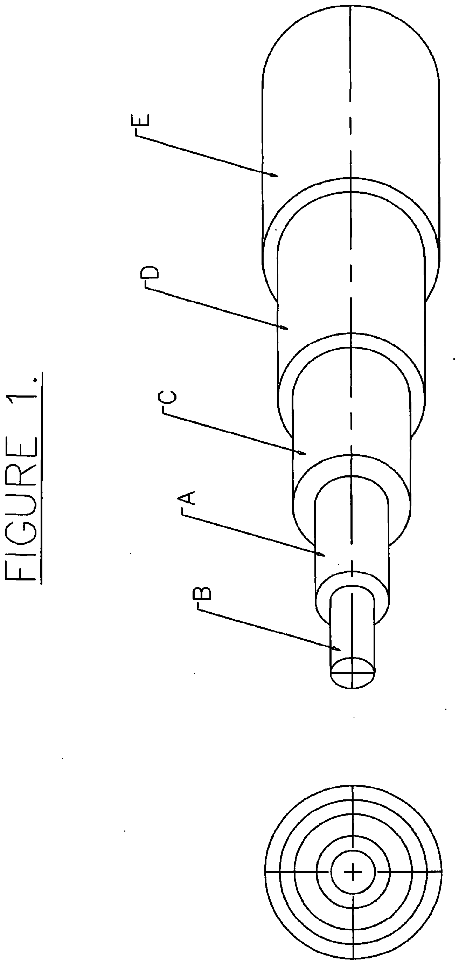

Flexible control cables are employed in many mechanical systems where a rigid link would be impractical. The range of applications is extensive but the world-wide automotive industry is arguably the largest and most important market for such components where, for example, they may be used as part of the actuating mechanism in door, bonnet, boot, accelerator, clutch and gear operating systems. The duty specification for such control cables varies according to the magnitude of the force applied during actuation of the mechanism and the frequency of its application. So, for example, a bonnet or boot mechanism may be subject to low forces applied infrequently and consequently the duty specification for the flexible control cable is less exacting. Clutch and gear cables on the other hand, may be subject to high load and high frequency operation and under such conditions a much higher specification control cable is required. Typically, the composite cable consists of a stranded wire inner core (illustrated at B in Figure 1) which is able to slide within the cable in response to an applied force. Several static layers facilitate the sliding motion of the inner core or actuator. A polymeric liner (illustrated at A in Figure 1) is designed to minimize friction and promote smooth operation of the actuating cable. The anti-friction liner is overlaid with thin metal spiral windings (illustrated at C in Figure 1) that permit a smooth change in the vertical or horizontal plane of the cable around obstructions without distorting the liner and thereby restricting the sliding motion of the inner core. Clutch and gear control cables have an additional wire reinforcement layer (illustrated at D in Figure 1) designed to maintain cable integrity under the higher loads that are typical for these applications. Finally, an outer covering of polymeric material (illustrated at E in Figure 1) protects the cable from potential long-term damage that can occur as a result of any hostile environmental conditions in the immediate vicinity of the cable.

This specification is concerned primarily with the polymeric anti-friction liner shown at A in Figure 1. Such materials are manufactured in a separate extrusion process and incorporated into the control cable in an integrated assembly procedure.

All control cable liners in current use have a tubular cross-section. Most of these liners also have surfaces that are as smooth as materials and manufacturing systems will permit, particularly the internal surface where it is important to minimize sliding resistance between the liner itself and the stranded wire actuating cable. Dimensional stability to a precise tolerance is another important consideration such that there is minimal free space between the outer surface of the stranded wire actuating cable and the inner surface of the cable liner.

The requirement to minimize sliding resistance throughout the service life of a cable liner and to maximize durability are important considerations in determining the type of raw material that may be used for fabrication. Perhaps the most common materials in commercial use include polytetrafluorethylene (PTFE), polybutylene terephthalate (PBT), polypropylene (PP), high-density polyethylene (HDPE) and acetal (POM). However, in considering the physical properties of such materials, particularly sliding resistance, durability and dimensional stability of extruded profiles, it is clear that each of these materials is more effective in one area of performance and less effective in another.

In terms of durability, attrition between the polymeric liner and the stranded metal actuating cable leads to wear at the internal surface of the liner producing an accumulation of finely divided polymer particulates which, over time, agglomerate into a paste in combination with the grease coating the surface of the actuating cable. The binding together of polymer and grease leads to a progressive loss in lubricity and, thereby, an increase in sliding resistance between the liner and the stranded metal actuating cable, impeding its smooth operation.

Alternative cable liner systems have been introduced and these address the problems of durability and dimensional stability in specific applications, for example, vehicle accelerator cables. One such system, designated a self-lubricating cable liner, is described in Patent Application number GB 0018830.0 wherein a silicone oil is coupled to an engineering polymer during compounding and the resulting material has both increased durability and dimensional stability. However, these gains in performance are balanced by a marginal reduction in the coefficient of friction of the material when compared, for example, to PTFE cable liners. Nevertheless, the previously described system has been successfully used in volume vehicle manufacture for a number of years.

The need to improve liner performance has led various workers in the field to investigate changes to the cross-section of the liner profile. For example, longitudinal ribs have been incorporated along the internal liner surface as described in US Patent 20090193926. The aim in this case is to reduce the surface area of the liner in contact with the actuating cable and thereby reduce the effect of friction. In performance trials this type of system has been shown to be unsuitable for long term use and, more importantly, inferior to existing designs. The longitudinal internal ribs were found to exacerbate liner wear, thereby increasing the free space between actuating cable and liner, notably at the positions where the flexible control cable is routed around obstructions such as engine or gearbox components.

During the control cable assembly operation a lubricant is introduced throughout the interface between the polymeric liner and the actuating core that promotes its smooth reciprocating movement. In-service, however, the repeated reciprocation of the core leads to a tendency for the lubricant to migrate progressively to the extreme ends of the control cable leading to a loss of cable lubricity and a consequent reduction in its service life.

US2005173960 discloses a rotational movement transmission device comprising a flexible shaft and a casing inside which the shaft is housed, said casing being formed from a hollow body of plastic material whose internal diameter is arranged to allow the rotation of said shaft inside said casing, the wall of the body having a variable thickness so that at least part of the casing has an internal surface comprising corrugations extending longitudinally.

JP2008223832 discloses a shift cable provided with a great quantity of twisted grooves on an inner circumference surface of a guide hole of an outer tube in such a manner that the same crosses in a crosshatching shape and grease is retained in the twisted grooves.

GB1380762 discloses a flexible plastics (polyvinyl chloride), protective sheath for a speedometer flexible shaft formed with annular or helical and/or axial hollow ribs arranged internally and externally on a thin-walled tubular jacket.

### SUMMARY OF INVENTION

According to a first aspect of the present invention, there is provided a control cable liner for a control cable having a core that slides along a predetermined path, the control cable liner being polymeric, having a constant outer diameter along its circumference and its length and having an internal surface to enclose and bear against a core; wherein a plurality of separated, substantially transverse, annular cavities projects outwardly from the internal surface, in particular at 90° to the longitudinal direction of the liner, the cavities being configured for lubricant retention. There is also provided a control cable comprising: a control cable liner as set out above and, within the liner, a core configured to slide along a predetermined path. There is also provided a method of transmitting a sliding movement along a predetermined path, the method comprising the steps of providing a control cable as set out above and extending along a predetermined path; and sliding one end of the core along the predetermined path.

Further embodiments of the invention are detailed in the appendant dependent claims.

### BRIEF DESCRIPTION OF DRAWINGS

Figure 1 is a perspective sectional view of a prior art control cable;
Figure 2 are perspective sectional, longitudinal sectional and cross-sectional views of a control cable liner according to the present invention;
Figure 3 are longitudinal sectional and detail views of an extrusion die head for manufacturing a control cable liner according to the present invention;
Figure 4 are views of the cam wheel of the device of figure 3 taken along and transverse to the wheel axis.

### DESCRIPTION OF EMBODIMENTS

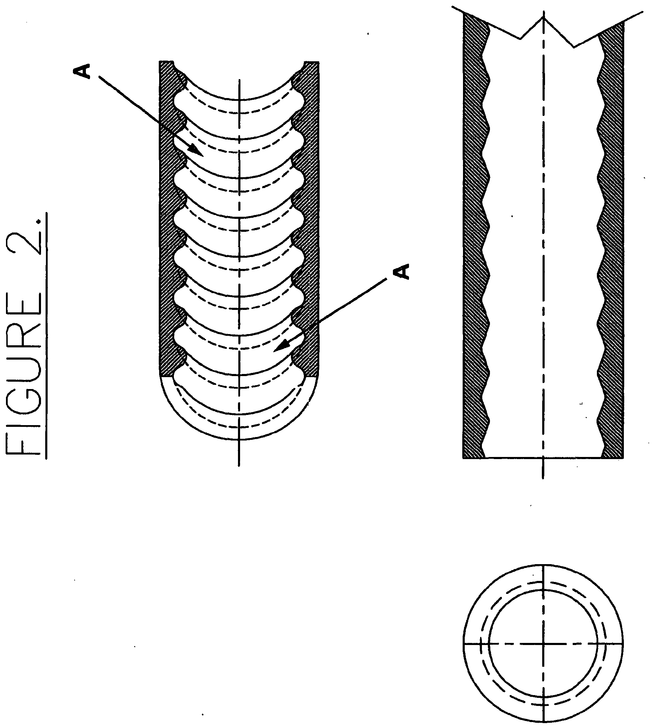

I have discovered that it is possible to significantly improve the performance and service life of all types of extruded cable liner by means of transverse lubricant retention cavities formed at predetermined intervals on the internal surface of a polymeric tubular extrudate such that a non-linear wall thickness is produced. A tubular extrudate formed in such a manner has an internal surface that is laterally ridged when viewed in longitudinal cross-section (A in Figure 2) whilst its external surface is smooth and of constant diameter. The cavities are preferably formed at 90° to the longitudinal direction of the tubular extrudate and at the optimum frequency required to minimize sliding resistance within the control cable. All such frequencies of transverse cavity and their angles to the longitudinal direction are within the scope of this specification. Although lubricant and contaminant retention is the primary purpose of the cavities their formation produces a consequent decrease in the area of internal liner surface in contact with the actuating cable and, thereby, friction, or more accurately sliding resistance when referring to control cables, is reduced. Where required a second polymeric material may be co-extruded onto the external surface of the liner thereby forming a strong composite system. The co-extruded layer may be flexible where, for example, the application calls for anti-vibration characteristics, as may be required for the door or window of a vehicle. Alternatively, an outer layer of a rigid or semi-rigid polymer will provide a higher level of resistance to compression of the control cable.

Standard extrusion equipment and techniques do not facilitate the fabrication of transverse ribs in a cable liner profile and consequently an unorthodox method of processing must be employed involving the development of a specially designed extrusion die-head.

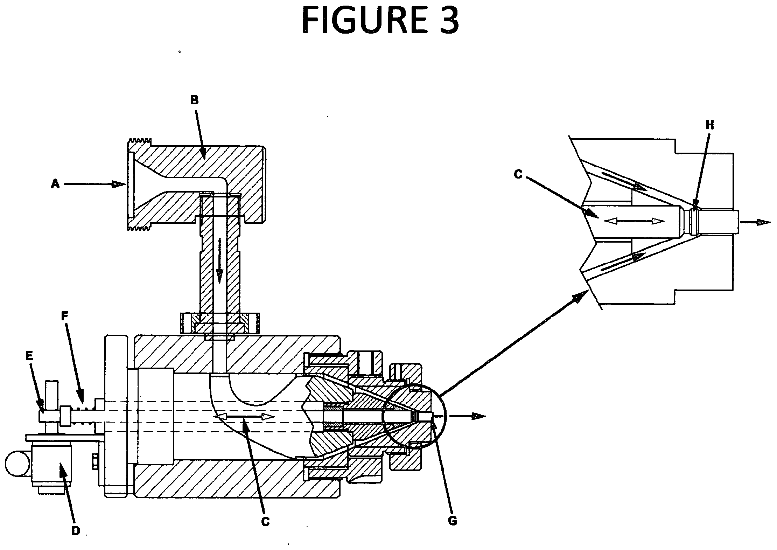

The die-head illustrated in Figure 3 is a swan-neck design whereby the primary polymer feed (A) from the extruder screw enters the swan-neck (B) and is then channelled in an indirect flow path into the main cavity within the body of the head. A flow control shaft (C) is located centrally within the body of the extrusion head and by virtue of its reciprocating motion the polymer flow is regularly restricted at a frequency determined by the number of internal cavities per linear metre that are required in the extruded liner. The reciprocating motion is facilitated by an electric motor and gearbox (D) that rotates a cam wheel (E) the lobes of which connect with the end of the flow control shaft. A return spring (F) ensures that the flow control shaft is in constant contact with the lobes of the cam. The extrusion die face is illustrated at G in Figure 3 and is also shown in an enlarged view together with the flow control system (H). The reciprocating action of the flow control shaft produces a variation in the material supplied to the extrusion die the extent of which is determined by the depth and shape of the lobes on the drive cam. The frequency of the variation in polymer flow is controlled by the rotation speed of the electric motor and gearbox assembly.

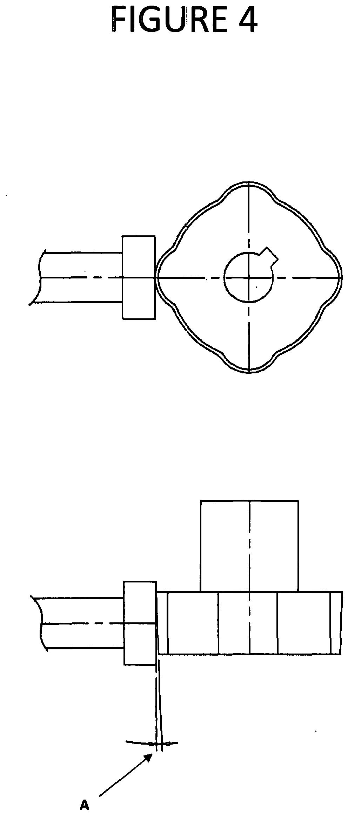

If the contact faces of the drive cam and the flow control shaft are in alignment then the flow control shaft will be static in that it will have no tendency to rotate. The lack of rotation produces an unequal distribution of polymer melt as it feeds in and around the die face and will tend to produce internal cavities within the tubular profile that are not of consistent depth and thickness. To counteract this effect the contact face of the flow control shaft is at a slight angle to the contact face of the drive cam (A in Figure 4) and this causes the flow control shaft to slowly rotate (the speed of rotation is determined by the rotational speed of the drive cam and the contact angle between the two faces). Rotation of the flow control shaft results in an advantageous reordering of the polymer melt so that a more equable distribution of the material is achieved at all points around the extrusion die thereby allowing internal cavities of consistent depth and thickness to form transversely around the internal surface of the tubular profile.

The culmination of the process described is a regular variation in the wall thickness of the profile being fabricated resulting in transverse undulations or cavities on its internal surface when viewed in longitudinal cross-section (A in Figure 2). When required a secondary but sequential process may be employed (as noted earlier) whereby a further coating of a different polymer may be overlaid or co-extruded onto the primary polymer of the control cable liner. The point on the extrusion die-head at which this second polymeric material is introduced is shown at G in Figure 3. Such secondary extrusion processing is employed where end-user specifications require particular characteristics, for example anti-vibration properties.

For some control cable applications the specification may call for the internal surface of the liner to be pre-coated with a grease or oil. For this purpose the die-head shown in Figure 3 has an additional inlet (illustrated at H) whereby additives may be injected under pressure coating the internal surface of the extrudate profile during its fabrication.

The wall thickness of the profile and frequency of transverse ribs may be varied according to the particular control cable application. For example, a profile having an internal diameter of 8 millimetres and an external diameter of 11 millimetres may have four transverse cavities per linear centimetre but other wall-thicknesses and frequencies of transverse cavity may be found by those skilled in the art and are therefore also within the scope of this specification.

The liner may be fabricated in a variety of polymeric materials according to the specific control cable application. Proprietary materials include:

**Example 1 For anti-vibration applications**

| | | | |
|---|---|---|---|
| Inner layer: | HDPE | - Atochem grade, | HD2003 SN53 |
| Outer layer: | SBS TPE | - Alphagary grade, | Evoprene 089 |

**Example 2 For high compressive strength applications**

| | | | |
|---|---|---|---|
| Inner layer: | PBT | - Ticona Celanex grade, | 1600A |
| Outer layer: | PP | - Montell grade, | EPD60R |

## Claims

1. A control cable liner for a control cable having a core that slides along a predetermined path, the control cable liner being polymeric, having a constant outer diameter along its circumference and its length and having an internal surface (A) to enclose and bear against a core;
wherein a plurality of separated, substantially transverse, annular cavities projects outwardly from the internal surface, in particular at 90° to the longitudinal direction of the liner, the cavities being configured for lubricant retention.

2. Control cable liner according to claim 1 and that is generally tubular in structure.

3. Control cable liner according to claim 1 or claim 2, wherein the plurality of substantially transverse cavities are located at largely regularly spaced intervals.

4. Control cable liner according to claim 1 claim 2, wherein the plurality of substantially transverse cavities are located at largely irregularly spaced intervals.

5. Control cable liner according to any preceding claim, wherein the liner is extruded.

6. Control cable liner according to any preceding claim and comprising an overlayer of a second polymeric material.

7. Control cable liner according to claim 6, wherein the overlayer is flexible.

8. Control cable liner according to claim 6, wherein the overlayer is rigid.

9. Control cable liner according to any preceding claim and having an internal diameter of 8mm, an external diameter of 11mm and four transverse cavities per linear centimetre.

10. A control cable comprising:
a control cable liner according to any preceding claim .

11. Method of transmitting a sliding movement along a predetermined path, the method comprising the steps of:
providing a control cable according to claim 10 and extending along a predetermined path; and
sliding one end of the core along the predetermined path.

## Patentansprüche

1. Ein Steuerkabelmantel für ein Steuerkabel, das einen Kern aufweist, der entlang eines vorgegebenen Weges gleitet, wobei der Steuerkabelmantel polymer ist, einen konstanten Außendurchmesser entlang seinem Umfang und seiner Länge aufweist und eine Innenoberfläche (A) aufweist, um einen Kern zu umschließen und gegen diesen zu drücken;
wobei eine Vielzahl von getrennten, im Wesentlichen querlaufenden, ringförmigen Hohlräumen aus der Innenoberfläche, insbesondere mit 90° zu der Längsrichtung des Mantels, nach außen hervorragt, wobei die Hohlräume zur Gleitmittelhaltung konfiguriert sind.

2. Steuerkabelmantel gemäß Anspruch 1 und der allgemein in der Struktur rohrförmig ist.

3. Steuerkabelmantel gemäß Anspruch 1 oder Anspruch 2, wobei die Vielzahl von im Wesentlichen querlaufenden Hohlräumen in großteils regelmäßig beabstandeten Intervallen angeordnet sind.

4. Steuerkabelmantel gemäß Anspruch 1 oder Anspruch 2, wobei die Vielzahl von im Wesentlichen querlaufenden Hohlräumen in großteils unregelmäßig beabstandeten Intervallen angeordnet sind.

5. Steuerkabelmantel gemäß einem vorhergehenden Anspruch, wobei der Mantel extrudiert ist.

6. Steuerkabelmantel gemäß einem vorhergehenden Anspruch und der eine Überbeschichtung aus einem zweiten polymeren Material beinhaltet.

7. Steuerkabelmantel gemäß Anspruch 6, wobei die Überbeschichtung flexibel ist.

8. Steuerkabelmantel gemäß Anspruch 6, wobei die Überbeschichtung steif ist.

9. Steuerkabelmantel gemäß einem vorhergehenden Anspruch und der einen Innendurchmesser von 8 mm, einen Außendurchmesser von 11 mm und vier querlaufende Hohlräume pro Linearzentimeter aufweist.

10. Ein Steuerkabel, das Folgendes beinhaltet:
einen Steuerkabelmantel gemäß einem vorhergehenden Anspruch.

11. Verfahren zum Übertragen einer Gleitbewegung entlang eines vorgegebenen Weges, wobei das Verfahren die folgenden Schritte beinhaltet:
Bereitstellen eines Steuerkabels gemäß Anspruch 10 und Erstrecken entlang eines vorgegebenen Weges; und
Gleiten von einem Ende des Kerns entlang des vorgegebenen Weges.

## Revendications

1. Gaine de câble de commande pour un câble de commande comportant une âme qui coulisse le long d'un chemin prédéterminé, la gaine de câble de commande étant en polymère, ayant un diamètre extérieur constant le long de sa circonférence et de sa longueur, et présentant une surface interne (A) pour entourer et reposer contre l'âme;
dans lequel une pluralité de cavités annulaires séparées, sensiblement transversales, font saillie vers l'extérieur à partir de la surface interne, en particulier à 90 ° par rapport à la direction longitudinale de la gaine, les cavités étant configurées pour retenir un lubrifiant.

2. Gaine de câble de commande selon la revendication 1 et qui a une structure généralement tubulaire.

3. Gaine de câble de commande selon la revendication 1 ou la revendication 2, dans laquelle la pluralité de cavités sensiblement transversales sont situées à des intervalles espacés de manière largement régulière.

4. Gaine de câble de commande selon la revendication 1 ou la revendication 2, dans laquelle la pluralité de cavités sensiblement transversales sont situées à des intervalles espacés de manière largement irrégulière.

5. Gaine de câble de commande selon l'une quelconque des revendications précédentes, dans laquelle la gaine est extrudée.

6. Gaine de câble de commande selon l'une quelconque des revendications précédentes et comprenant une surcouche d'un second matériau polymère.

7. Gaine de câble de commande selon la revendication 6, dans laquelle la surcouche est souple.

8. Gaine de câble de commande selon la revendication 6, dans laquelle la surcouche est rigide.

9. Gaine de câble de commande selon l'une quelconque des revendications précédentes et ayant un diamètre interne de 8 mm, un diamètre externe de 11 mm et quatre cavités transversales par centimètre linéaire.

10. Câble de commande comprenant :
une gaine de câble de commande selon l'une quelconque des revendications précédentes.

11. Procédé de transmission d'un mouvement de glissement le long d'un chemin prédéterminé, le procédé comprenant les étapes consistant à :
fournir un câble de commande selon la revendication 10 et s'étendant le long d'un chemin prédéterminé; et
glisser une extrémité de l'âme le long du chemin prédéterminé.
